# EUROPÄISCHE PATENTSCHRIFT

(11) **EP 3 857 078 B1**
(45) Veröffentlichungstag und Bekanntmachung des Hinweises auf die Patenterteilung: **27.05.2026**
(21) Anmeldenummer: 19773395.9
(22) Anmeldetag: 19.09.2019
(51) Int. Cl.: F16C 17/02, B62D 5/04

(54) **LAGERVORRICHTUNG, UNTERSETZUNGSGETRIEBE, ELEKTROMECHANISCHE SERVOLENKUNG UND VERFAHREN ZUR VERBINDUNG EINES ANTRIEBSELEMENTS EINER ELEKTROMECHANISCHEN SERVOLENKUNG MIT EINER LAGERVORRICHTUNG**
BEARING DEVICE, REDUCTION GEAR, ELECTROMECHANICAL POWER STEERING SYSTEM AND METHOD FOR CONNECTING A DRIVE ELEMENT OF AN ELECTROMECHANICAL POWER STEERING TO A BEARING DEVICE
DISPOSITIF DE PALIER, RÉDUCTEUR, DIRECTION ÉLECTROMÉCANIQUE ASSISTÉE ET PROCÉDÉ DE RACCORDEMENT D'UN ÉLÉMENT D'ENTRAÎNEMENT D'UNE DIRECTION ÉLECTROMÉCANIQUE ASSISTÉE A UN DISPOSITIF DE PALIER

(30) Priorität: 28.09.2018 DE 102018124139
(43) Veröffentlichungstag der Anmeldung: 04.08.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SCHACHT, Arne, 6800 Feldkirch (AT); SPECHT, Jean-Pierre, 9469 Haag (CH)
(74) Vertreter: thyssenkrupp Intellectual Property GmbH
(86) Internationale Anmeldenummer: PCT/EP2019/075121
(87) Internationale Veröffentlichungsnummer: WO 2020/064489

(56) Entgegenhaltungen:
- EP-A1- 0 369 847
- EP-A2- 0 082 375
- DE-A1- 102008 056 024
- DE-A1- 102010 064 295
- DE-A1- 102011 013 957
- DE-A1- 4 210 302
- JP-A- H0 226 313
- JP-A- H07 190 052
- KR-A- 20170 080 899
- US-A- 4 090 746
- US-A- 5 144 738
- US-A- 5 275 493
- US-A- 5 669 718
- US-A1- 2009 249 909
- US-A1- 2013 251 295
- US-A1- 2018 156 325
- US-B2- 6 965 180

## Beschreibung

Die vorliegende Erfindung betrifft eine Lagervorrichtung für ein Untersetzungsgetriebe für eine elektromechanische Servolenkung, umfassend ein erstes Ende und ein dem ersten Ende gegenüberliegendes zweites Ende, wobei zwischen dem ersten Ende und dem zweiten Ende ein Kontaktabschnitt vorgesehen ist, und einen Lagerabschnitt zum Lagern eines Antriebselements.

Ferner betrifft die vorliegende Erfindung ein Untersetzungsgetriebe, umfassend ein mit einem Schraubrad kämmendes Antriebselement, wobei das Antriebselement als Welle ausgebildet ist, welche in einem Getriebegehäuse angeordnet ist und an ihrem ersten Ende und an ihrem zweiten Ende in dem Getriebegehäuse drehbar um eine Drehachse gelagert ist.

Ferner betrifft die vorliegende Erfindung eine elektromechanische Servolenkung, umfassend einen Elektromotor mit einer Motorwelle und ein Untersetzungsgetriebe.

Schließlich die betrifft die vorliegende Erfindung ein Verfahren zur Verbindung eines Antriebselements einer elektromechanischen Servolenkung mit einer Lagervorrichtung, die das Antriebselement drehbar in einem Getriebegehäuse um eine Drehachse lagert und in Richtung eines Schraubrads vorspannt.

Untersetzungsgetriebe der eingangs genannten Art werden häufig in Kraftfahrzeugen zur Unterstützung von Lenkbewegungen oder im Falle von Steer-by-Wire Lenksystem zur alleinigen Umsetzung eines Lenkbefehls in eine entsprechende Lenkbewegung eingesetzt.

Im ersten Falle werden Untersetzungsgetriebe der eingangs genannten Art in einer elektromechanischen Servolenkung eines Kraftfahrzeugs verwendet, wobei die Servolenkung eine mit einem Lenkrad verbundene Eingangswelle aufweist, über welche vom Fahrer Lenkbefehle in Form von Lenkmomenten eingeleitet werden. Eine mit der Eingangswelle verbundene Ausgangswelle überträgt die Lenkmomente über Spurstangen, also verschwenkbare Bauteile einer Fahrzeuglenkung, an die zu lenkenden Räder.

Untersetzungsgetriebe der eingangs genannten Art, auch als Hilfskraftunterstützungen bezeichnet, werden dabei zum Eintragen von Hilfsdrehmomenten üblicherweise an der genannten Ausgangswelle, an einem Lenkritzel oder an einer Zahnstange eingesetzt. Das Untersetzungsgetriebe der eingangs genannten Art wird dabei über die Bestimmung des vom Fahrzeuglenker über das Lenkrad in die Eingangswelle eingetragenen Drehmoments bezüglich der Ausgangswelle angesteuert.

In Untersetzungsgetrieben der eingangs genannten Art, insbesondere, wenn sie als elektromechanische Hilfskraftunterstützungen für elektromechanische Servolenkungen der eingangs genannten Art ausgebildet sind, ist es bekannt, die jeweilige Unterstützungskraft mittels eines Elektromotors aufzubringen. Sprich, ein durch den Elektromotor erzeugtes Antriebsdrehmoment wird in die Unterstützungskraft (Lenkkraft) umgewandelt und sodann an die genannte Spurstange übertragen, insbesondere über einen Zahneingriff mit einer Zahnstange.

Hierzu ist der Elektromotor üblicherweise mit einer Antriebsschnecke gekoppelt, entweder durch ein direktes Ansetzen der Antriebsschnecke auf eine Motorwelle des Elektromotors, oder mittels eines zwischen Elektromotor und Antriebsschnecke geschalteten Getriebes. Die Antriebsschnecke wirkt auf ein Schneckenrad, welches das Antriebsdrehmoment, beispielsweise über ein Getriebe, einen Zahnstangenmechanismus oder einen Riementrieb auf den eigentlichen Lenkstrang überträgt. Hierbei kann das Untersetzungsgetriebe der eingangs genannten Art die Unterstützungskraft, beispielsweise im Bereich der Lenkwelle, des Lenkritzels oder der Zahnstange eintragen.

Aus der DE 10 2013 003 749 A1 ist ein Untersetzungsgetriebe der eingangs genannten Art bekannt. Bei dem bekannten Untersetzungsgetriebe ist die Antriebsschnecke in einem Gehäuse des bekannten Untersetzungsgetriebes mittels eines Lagers gelagert. Eine Lageranordnung zur Lagerung einer Welle ist beispielsweise aus der DE 10 2008 056 024 A1 bekannt.

Ein Nachteil des Stands der Technik äußert sich darin, dass fertigungsbedingte oder montagebedingte Ungenauigkeiten, Abnutzungseffekte, Verschmutzungen - einzelnen oder in Kombination - dazu führen, dass der Eingriff zwischen Schneckenrad und Schnecke für einen energiesparenden und wartungsarmen Betrieb eines Untersetzungsgetriebes der eingangs genannten Art nicht optimal ist. Sprich, die Lagerung der Schnecke und/oder einer Motorwelle, welche die Schnecke antreibt, ist nachteilig.

Aufgabe der vorliegenden Erfindung ist es, eine Lagervorrichtung der eingangs genannten Art, ein Untersetzungsgetriebe der eingangs genannten Art sowie ein Verfahren der eingangs genannten Art bereitzustellen, durch die die Nachteile des Stands der Technik umgangen werden.

Gelöst wird die Aufgabe durch die Merkmale der unabhängigen Patentansprüche1 und 13. Vorteilhafte Weiterbildungen ergeben sich aus den jeweiligen Unteransprüchen.

Erfindungsgemäß wird diese Aufgabe hinsichtlich der Lagervorrichtung dadurch gelöst, dass der Lagerabschnitt als Öffnung ausgebildet ist, welche von dem ersten Ende in Richtung des zweiten Endes hineinragt und eine Ausnehmung vom zweiten Ende in Richtung des ersten Endes hineinragt, wobei die Öffnung zu der Ausnehmung radial beabstandet ist. Bevorzugt ist die erfindungsgemäße Lagervorrichtung dabei als Lagerbuchse mit einem bevorzugt runden Querschnitt ausgebildet.

Vorzugsweise ist die Lagervorrichtung zum vorgespannten Lagern des Antriebselements längs der Drehachse ausgestaltet. Sprich, das Antriebselement ist insbesondere gegenüber einer Auslenkung längs der Drehachse fixiert. Dies ist vorteilhaft, weil eine einer axialen Auslenkung des Antriebselements, also zum Beispiel der genannten Schnecke oder der genannten Motorwelle, entgegenwirkende Lagerung in axialer Richtung bereitgestellt wird.

Vorzugsweise ist das Antriebselement durch die erfindungsgemäße Lagervorrichtung elastisch vorgespannt längs der Drehachse gelagert. Indem das Antriebselement elastisch vorgespannt gelagert ist, zum Beispiel durch ein Rückstellmittel, insbesondere ein Federelement, wird in vorteilhafterweise eine gegenüber einer Form- und/oder Gestaltänderung des Antriebselements nachgiebige Lagerung des Antriebselements bereitgestellt, so dass auch im Falle einer Form- und/oder Gestaltänderung das Antriebselement durch eine durch eine elastische Vorspannung hervorgerufene Lagerkraft längs der Drehachse gelagert ist, bevorzugt durch eine radiale und/oder axiale Vorspannung hervorgerufene Lagerkraft gelagert ist. Sprich, das Antriebselement ist in einem gewissen Bereich hinsichtlich einer Form- und/oder Gestaltänderung des Antriebselements adaptiv gelagert, sodass eine sichere Lagerung für eine Vielzahl von Fällen gewährleistet ist. Darüber hinaus werden mechanische Spannungen in dem Antriebselement bei einer Vergrößerung einer räumlichen Ausdehnung des Antriebselements, zum Beispiel durch eine Wärmeausdehnung, reduziert oder sogar vermieden. Mit Form- und/oder Gestaltänderung des Antriebselements ist insbesondere, aber nicht abschließend eine Form- und/oder Gestaltänderung aufgrund von Feuchtigkeit und/oder Wärmeausdehnung und/oder Wärmeschrumpfung und/oder einer elastischen/plastischen/elastisch-plastischen Verformung und/oder eines Abriebs des Antriebselements gemeint.

In der erfindungsgemäßen Lagervorrichtung ist die Öffnung zumindest teilweise kreiszylindrisch ausgebildet und weist einen Öffnungsboden auf. Die Öffnung ist besonders bevorzugt durchgehend kreiszylindrisch ausgebildet. Weiterhin ist es denkbar und möglich, dass die Öffnung ein Gewinde, eine Rändelung und/oder Beschichtung aufweisen kann. Ferner ist es möglich, dass die Öffnung konisch ausgebildet ist oder trichterförmig zuläuft. Bevorzugt weist der Bodenabschnitt einen Vorsprung, besonders bevorzugt einen konzentrischen Vorsprung. Danach kontaktiert das Antriebselement in axialer Richtung die Lagervorrichtung und damit den Bodenabschnitt über den Vorsprung, wonach sich ein dementsprechender mittlerer Reibdurchmesser verringert. Die Reibung verringert sich somit. Dies ist insbesondere dann vorteilhaft, wenn die Lagervorrichtung axial gegen das Antriebselement vorgespannt gelagert ist. In der erfindungsgemäßen Lagervorrichtung ist die Ausnehmung radial umlaufend ausgebildet und weist einen Ausnehmungsboden auf. Bevorzugt ist die Tiefe der Öffnung grösser oder gleich der Tiefe der Ausnehmung. Ferner ist es denkbar und möglich, dass die Ausnehmung eine größere Vertiefung aufweist als die Öffnung.

In einer vorteilhaften Ausführungsform der erfindungsgemäßen Lagervorrichtung ist die Ausnehmung ringförmig ausgebildet. Die Ausnehmung umgibt die Öffnung, bevorzugt sind die Ausnehmung und die Öffnung konzentrisch angeordnet oder anordenbar. Besonders bevorzugt ist die Ausnehmung derart ausgeformt, dass die Lagervorrichtung in einem Längsschnitt, zum Beispiel entlang einer Drehachse des Antriebselements, W-förmig bzw. M-förmig ist.

In einer vorteilhaften Ausführungsform der erfindungsgemäßen Lagervorrichtung ist die Ausnehmung konisch ausgebildet. Andere Formen sind ebenfalls denkbar und möglich, wie die Trichterform.

In einer vorteilhaften Ausführungsform der erfindungsgemäßen Lagervorrichtung weist die Lagervorrichtung eine Wandstärke auf, wobei die Ausnehmung ein Volumen aufweist, dessen Wert größer ist als die kubische Wandstärke. Vorzugsweise ist die Wandstärke eine kleinste, größte oder mittlere Wandstärke, besonders bevorzugt eine kleinste Wandstärke. Die kubische Wandstärke ist der Wert der Wandstärke dreimal mit sich selbst multipliziert. Vorzugsweise ist die Wandstärke eine maximale Wandstärke oder eine mittlere Wandstärke, besonders bevorzugt ist die Wandstärke eine minimale Wandstärke der Lagervorrichtung.

In der erfindungsgemäßen Lagervorrichtung ist ein radialer Abstand zwischen der Öffnung und der Ausnehmung kleiner einem ersten Abstand zwischen dem Ausnehmungsboden und der Stirnseite des ersten Endes und/oder kleiner einem zweiten Abstand zwischen dem Öffnungsboden und der Stirnseite des zweiten Endes ausgebildet. Bevorzugt ist der radiale Abstand zum ersten Ende der Lagervorrichtung hin grösser ausgebildet als zum zweiten Ende hin. Ferner ist es in einer weiteren vorteilhaften Ausführungsform vorgesehen, dass ein zweiter radialer Abstand zwischen der Ausnehmung und der Außenumfangsfläche des Kontaktabschnitts vorgesehen ist. Der zweite radiale Abstand ist dabei grösser oder gleich dem ersten radialen Abstand. Bevorzugt ist der zweite radiale Abstand zum ersten Ende hin grösser ausgebildet als zum zweiten Ende.

In einer vorteilhaften Ausführungsform der erfindungsgemäßen Lagervorrichtung ist der zweite Abstand zwischen dem Öffnungsboden und der Stirnseite des zweiten Endes kleiner oder gleich dem ersten Abstand zwischen dem Ausnehmungsboden und der Stirnseite des ersten Endes.

In einer vorteilhaften Ausführungsform der erfindungsgemäßen Lagervorrichtung ist die Lagervorrichtung einstückig ausgebildet.

In einer vorteilhaften Ausführungsform der erfindungsgemäßen Lagervorrichtung umfasst diese einen Kunststoff, weiter bevorzugt ist diese aus einem Harzmaterial ausgebildet und/oder mit einem Kunststoff beschichtet, bevorzugt aus POM, PA, PEEK oder PTFE.

In einer vorteilhaften Ausführungsform der erfindungsgemäßen Lagervorrichtung ist an einem Außenumfang des Kontaktabschnitts mindestens ein Vorsprung vorgesehen. In einer vorteilhaften Ausführungsform der erfindungsgemäßen Lagervorrichtung weist der Lagerabschnitt eine oder mehrere Vertiefungen auf, wobei dies insbesondere zur Bevorratung und/oder zum Transport von Schmiermittel vorgesehen ist.

In einer vorteilhaften Ausführungsform der erfindungsgemäßen Lagervorrichtung sind die Projektion der Öffnung und der Ausnehmung in eine Projektionsebene überdeckungsfrei zueinander, insbesondere orthogonal oder parallel zu einer Längsachse der Lagervorrichtung. Mit anderen Worten ausgedrückt: die projizierten Kanten der Ausnehmung und der Öffnung schneiden sich nicht und ragen nicht ineinander t

In einer vorteilhaften Ausführungsform der erfindungsgemäßen Lagervorrichtung weist diese ein elastisch vorspannbares Spannmittel zum Vorspannen der Lagervorrichtung gegen das Antriebselement auf.

In einer weiteren vorteilhaften Ausführungsform bildet der Lagerabschnitt der Lagervorrichtung ein Lagermittel zum gleitenden Lagern des Antriebselements, insbesondere ein als Radiallager ausgestaltetes Lagermittel zum gleitenden Lagern des Antriebselements. Dies ist vorteilhaft, weil durch diese Maßnahme zum Beispiel ein wälzkörperfreies Radiallager, insbesondere ein Gleitlager, bereitgestellt wird, welches einer radialen Auslenkung durch einen Formschluss mit dem Antriebselement, also einer Schnecke oder einer Motorwelle, realisiert werden kann, zum Beispiel ist ein das Antriebselement lagernder Abschnitt oder Bereich eines Gleitlagers als ein das Antriebselement dort räumlich-körperlich umgebende Hülse und/oder Buchse ausgestaltet, also vorzugsweise als Hohlzylinder. Insbesondere ist das Lagermittel als Fixiermittel zum radialen Fixieren des Antriebselements ausgestaltet.

Es kommen insbesondere Gleitlager zur Festkörperreibung, Flüssigkeitsreibung oder einer entsprechenden Mischreibung in Betracht. Als Material(ien) für ein solches als Gleitlager ausgebildete Lagervorrichtung kommen insbesondere ein oder mehrere Kunststoffe in Betracht, aber auch ergänzend oder alternativ eine oder mehrere Keramiken und/oder Graphit und/oder ein oder mehrere Sintermetalle. Besonders bevorzugt ist die Lagervorrichtung aus einem Kunststoff gebildet. Insbesondere handelt es sich bei der Lagervorrichtung um ein Spritzgussteil.

In vorteilhafter Weiterbildung ist die Lagervorrichtung kraftschlüssig gegenüber dem Antriebselement anordenbar, insbesondere in einem die Lagervorrichtung zumindest teilweise aufnehmenden Lagersitz eines Gehäuses, so dass das Antriebselement zusätzlich und/oder ergänzend aufgrund einer entsprechenden Reibkraft durch die Lagervorrichtung gegen eine Auslenkung von einer vorgegebenen Position des Antriebselements entgegenwirkend oder zumindest demgegenüber hemmend gelagert ist. Dies wird vor allem durch den Kontaktabschnitt der Lagervorrichtung realisiert. Danach lässt sich ferner die Lagervorrichtung in dem genannten Lagersitz ohne weitere Maßnahmen zum Zusammenwirken mit dem Antriebselement anordnen, also montieren. Indem die Lagervorrichtung kraftschlüssig gegenüber dem Antriebselement anordenbar ist, ist das Antriebselement insoweit auch beweglich gelagert, insbesondere gegenüber einer Auslenkung längs der Drehachse.

Nach einer bevorzugten Ausführungsform ist die Lagervorrichtung elastisch verformbar, insbesondere der Kontaktabschnitt, so dass es sich im Wesentlichen elastisch reversibel in dem genannten Lagersitz lagern lässt. Danach lässt sich beispielsweise die Lagervorrichtung zum Beispiel in radialer Richtung elastisch vorspannen, so dass die Lagervorrichtung in einem montierten Zustand durch eine entsprechende, die elastische Verformung zurückstellende Kraft zum Beispiel gegen eine Innenwandung eines für die Montage der Lagervorrichtung vorgesehenen Lagersitzes gepresst wird. Daran ist ferner vorteilhaft, dass die Lagervorrichtung in dem Lagersitz gegenüber dem Antriebselement in radialer Richtung selbstzentrierend ist bzw. selbstzentrierend ausgestaltet ist.

In einer vorteilhaften Ausführungsform ist die Lagervorrichtung zum Versorgen eines zwischen der Lagervorrichtung und dem Antriebselement gebildeten Kontaktbereichs mit Schmiermittel ausgestaltet. Danach weist die erfindungsgemäße Lagervorrichtung in einer vorteilhaften Ausführungsform in dem zum Lagern des Antriebselements vorgesehenen Lagerabschnitt vorzugsweise eine oder mehrere Ausnehmungen auf, vorzugsweise kanalförmige Ausnehmungen, insbesondere eine oder mehrere Nuten, zur Bevorratung und/oder zum Transport von Schmiermittel an und/oder in dem Kontaktbereich auf, so dass der Kontaktbereich bei der Ausführung der Drehbewegung mit Schmiermittel versorgt wird, was einen reibungsarmen und damit wartungs- und verschleißarmen Betrieb der erfindungsgemäßen Lagervorrichtung in vorteilhafterweise zur Folge hat. Danach kann die Lagervorrichtung auch sogenannte Schmiertaschen aufweisen.

In einer weiteren vorteilhaften Ausführungsform ist die Lagervorrichtung gegen das Antriebselement vorspannbar gelagert. Dies ist vorteilhaft, weil dadurch das Antriebselement in dem angetriebenen Zustand durch und/oder über die Lagervorrichtung vorgespannt gelagert ist, so dass das Antriebselement durch Aufbringen einer entsprechenden Vorspannkraft weiterhin durch die Lagervorrichtung, insbesondere reibungsarm gelagert ist. Vorzugsweise ist die Lagervorrichtung dabei in axialer Richtung gegen das Antriebselement gelagert. Vorzugsweise ist die Lagervorrichtung dabei elastisch vorspannbar gelagert, also im Sinne einer Feder, in dem der Kontaktabschnitt durch das Fügen in den Lagersitz vorgespannt ist.

In einer weiteren vorteilhaften Ausführungsform der erfindungsgemäßen Lagervorrichtung weist diese ein elastisch vorspannbares Spannmittel zum Vorspannen der Lagervorrichtung gegen das Antriebselement auf. Dies ist vorteilhaft, weil dadurch einerseits eine für die Lagerung des Antriebselements geeignete Lagerung vorgesehen werden kann und andererseits durch das Spannmittel ein für das Entgegenwirken gegen eine Auslenkung des Antriebselements angepasste und damit optimierte Maßnahme vorgesehen werden kann, nämlich durch eine entsprechende Ausgestaltung des Spannmittels. Bevorzugt ist das Spannmittel ringförmig, zum Beispiel als Vorspannring oder Haltering, oder scheibenförmig, zum Beispiel als Vorspannscheibe oder Haltescheibe, ausgeformt. Dies ist vor allem dann vorteilhaft, wenn das Spannmittel mit der Lagervorrichtung zusammenwirken soll.

Es ist ferner vorteilhaft, wenn das Spannmittel mindestens eine Auswölbung aufweist. Die Auswölbung wirkt dabei in besonders vorteilhafterweise wie ein Federelement, durch das eine Vorspannkraft auf das Antriebselement ausgeübt werden kann, zum Beispiel im Sinne einer Tellerfeder. Darüber hinaus können über eine elastische Verformung der Auswölbung besonders gut Längenänderungen des Antriebselements kompensiert werden, insbesondere längs der Drehachse. Es ist insbesondere vorteilhaft, wenn die Auswölbung das Antriebselement und/oder die Lagervorrichtung mit einer durch die Form der Auswölbung definierten konvexen Seite kontaktiert bzw. kontaktierend anordenbar ist.

In einer weiteren vorteilhaften Ausführungsform ist das Spannmittel selbstarretierend ausgestaltet. Dies ist vorteilhaft, weil das Spannmittel zum Beispiel in einem Lagersitz zum Aufbringen einer Vorspannkraft in einer vorgegebenen Position anordenbar ist, ohne dass konstruktive oder sonstige Maßnahmen hinsichtlich des Lagersitzes vorgesehen werden müssen, um das Spannmittel dort zu montieren. Dies wird zum Beispiel dadurch realisiert, dass das Spannmittel quer zu einer Richtung, entlang der die Vorspannkraft aufgebracht werden soll bzw. Aufbringbar ist, zum Beispiel eine Vorspannkraft für einen axial-elastisch Druckzustand des Antriebselements im Falle kraftschlüssig angeordnet bzw. Anordenbar ist und/oder aufgrund einer Oberflächenstruktur des Spannmittels mit dem genannten Lagersitz mechanisch verankert ist bzw. mechanisch verankerbar ist. Eine mechanische Verankerung ist dadurch realisierbar, dass das Spannmittel in einem montierten Zustand aufgrund einer sich zurückstellenden elastischen Verformung des Spannmittels gegen einen Lagersitz gepresst wird, insbesondere radial, wobei es insbesondere vorteilhaft ist, wenn das Spannmittel zum Beispiel aufgrund einer entsprechenden Materialwahl und/oder radialen Vorspannkraft teilweise in eine Innenwandung des Lagersitzes eindringt, also wenn das Spannmittel zumindest in einem für die Montage in dem Lagersitz vorgesehenen Bereich eine höhere Härte (zum Beispiel nach Vickers) aufweist als ein korrespondierender Bereich des Lagersitzes. Eine für ein solches Verkrallen und/oder Verankern besonders gut geeignete Oberflächenstruktur des Spannmittels ist mäanderförmig. Diese Ausführungsform ist insbesondere unter dem Aspekt vorteilhaft, dass das Spannmittel als Ring oder Scheibe ausgeformt und der genannte Lagersitz hohlzylindrisch ausgeformt ist. Das Spannmittel hat bevorzugt einen kreisrunden inneren Abschnitt, welcher mit dem Gleitlager in direktem Kontakt stehen kann. Von dem kreisrunden Abschnitt ragen fächerförmig oder S-förmig oder wellenförmig oder gewölbte radial nach innen oder bevorzugt nach außen aufgebogene Segmente, welche mit der Gehäusewandung in Kontakt stehen. Die Segmente sind bevorzugt einstückig mit dem kreisrunden inneren Abschnitt ausgebildet und bilden einen Rand. Es ist weiterhin denkbar und möglich, dass vom kreisrunden Abschnitt mindestens eine Lasche oder Zunge oder ein Zahn radial nach außen in die Gehäusewandung ragt, wobei die mindestens eine Lasche, die Zunge oder der Zahn radial vorspannbar ist, sodass der Rand des Spannmittels sternenförmig oder zahnkranzförmig ausgestaltet sein kann. Der Rand kann weiterhin Schlitze aufweisen für eine bessere Vorspannung.

In einer weiteren vorteilhaften Ausführungsform weist die Lagervorrichtung einen Kontaktabschnitt zum kraftschlüssigen Kontaktieren mit einem zum Lagern der Lagervorrichtung vorgesehenen Bereich auf. Erfindungsgemäß ist an einem Außenumfang des Kontaktabschnitts mindestens ein Vorsprung vorgesehen. Dies ist vorteilhaft, weil sich die Lagervorrichtung zum Beispiel in einem von einem Gehäuse, dem Getriebegehäuse, umfassten Lagersitz ohne weitere Maßnahmen zum Zusammenwirken mit dem Antriebselement anordnen lässt, also insbesondere montieren lässt. Ferner lässt sich die Lagervorrichtung danach erst ab dem Überschreiten einer vorgegebenen Reibkraft in eine axiale Richtung bezüglich einer Auslenkung des Antriebselements verschieben und das Lagermittel ist durch den einen oder durch mehrere Vorsprünge im Gehäuse vorgespannt. Der Hüllkreisdurchmesser der Lagervorrichtung im Bereich der Vorsprünge ist größer ausgebildet als in den Bereichen der Außenoberfläche der Lagervorrichtung ohne Vorsprung.

Der Vorsprung oder die Vorsprünge können dabei insbesondere durch ein in und/oder an dem Außenumfang gedrehtes Gewinde mit einem oder mehreren Gewindegängen und/oder durch eine Rändelung, insbesondere im Falle eines als Radiallager, insbesondere Gleitlager, ausgestalteten Lagermittels eine entsprechende Längsrändelung (in axiale Richtung des Radiallagers erstreckend) und/oder Querrändelung (in Umfangsrichtung des Radiallagers erstreckend), gebildet sein oder durch eine Kombination davon. Alternativ und/oder ergänzend können der Vorsprung oder die Vorsprünge auch noppenartig ausgeformt sein. Ein Vorteil der beschriebenen Vorsprünge (Gewinde und/oder Rändelung und/oder noppenartig) besteht darin, dass die Lagervorrichtung zum Beispiel mit einer konstanten Kraft verschoben werden kann, insbesondere in axiale Richtung bezüglich des Antriebselements, so dass ein Lagerspiel über eine entsprechende Kraftsteuerung eingestellt werden kann. Die genannten Vorsprünge können sich insbesondere teilweise oder vollständig elastisch, plastisch oder elastisch-plastisch im montierten Zustand die Lagervorrichtung verformen. Der Kontaktabschnitt kann insbesondere als Federbalken ausgeformt sein.

In einer weiteren vorteilhaften Ausführungsform der erfindungsgemäßen Lagervorrichtung ist das Spannmittel in einem gespannten Zustand eine Vorspannkraft auf den Kontaktabschnitt ausübend. Dies ist vorteilhaft, weil dadurch eine durch die Vorspannkraft, insbesondere in axialer Richtung, hervorgerufene Reibkraft gegenüber dem Antriebselement reduziert wird, insbesondere im Falle einer Ausgestaltung des Antriebselements als Motorwelle.

In einer weiteren vorteilhaften Ausführungsform ist das Spannmittel in einem gespannten Zustand eine Vorspannkraft auf einen das Antriebselement zumindest teilweise aufnehmenden Kontaktabschnitt der Lagervorrichtung ausübend ist. Dies ist vorteilhaft, weil dadurch die effektiv auf das Antriebselement wirkende Vorspannkraft maximiert wird. Der Lagerabschnitt ist bevorzugt als Öffnung ausgebildet, welche topfförmig ist und einen Bodenabschnitt aufweist. Sprich, der Lagerabschnitt kann als Sackloch im Gleitlager ausgestaltet sein. Die Öffnung ist dabei vorzugsweise kreiszylindrisch. Weiterhin ist es denkbar und möglich, dass die Öffnung des Lagerabschnitts entsprechend der Kontur des mit diesem in Kontakt stehenden Abschnitt der Antriebsschnecke an dem Innenumfang ein gedrehtes Gewinde mit einem oder mehreren Gewindegängen und/oder durch eine Rändelung, insbesondere eine entsprechende Längsrändelung (in axiale Richtung des Radiallagers erstreckend) und/oder Querrändelung (in Umfangsrichtung des Radiallagers erstreckend), gebildet sein oder durch eine Kombination davon.

Bevorzugt weist die Lagervorrichtung mindestens einen Wälzkörper auf, der zwischen der Öffnung und dem Antriebselement anordenbar ist oder angeordnet ist.

Die Aufgabe wird hinsichtlich des eingangs genannten Untersetzungsgetriebes dadurch gelöst, dass das Untersetzungsgetriebe eine Lagervorrichtung nach einem der beigefügten Ansprüche und/oder hier offenbarten Ausführungsformen umfasst.

In einer vorteilhaften Ausführungsform des erfindungsgemäßen Untersetzungsgetriebes ist die Welle an ihrem ersten Ende und/oder an ihrem zweiten Ende zumindest teilweise in der Öffnung der Lagervorrichtung aufgenommen, bevorzugt derart, dass eine formschlüssige Verbindung zwischen Lagervorrichtung und Welle ermöglicht werden kann.

In einer weiteren vorteilhaften Ausführungsform des erfindungsgemäßen Untersetzungsgetriebes spannt die Lagervorrichtung die Welle in axialer und/oder radialer und/oder orthogonaler Richtung zur Drehachse vor.

In einer vorteilhaften Ausführungsform des erfindungsgemäßen Untersetzungsgetriebes weist die Lagervorrichtung einen Kontaktabschnitt zum kraftschlüssigen Kontaktieren mit einem zum Lagern der Lagervorrichtung vorgesehenen Bereich des Getriebegehäuses auf, wobei an einem Außenumfang des Kontaktabschnitts mindestens ein Vorsprung vorgesehen ist.

In einer vorteilhaften Ausführungsform des erfindungsgemäßen Untersetzungsgetriebes ist die Welle eine Schneckenwelle und das Schraubrad ein Schneckenrad.

Die Aufgabe wird hinsichtlich der eingangs genannten elektromechanischen Servolenkung dadurch gelöst, dass Untersetzungsgetriebe nach einem der beigefügten Ansprüche und/oder hier offenbarten Ausführungsformen ausgebildet ist, wobei die Motorwelle die Welle antreibt.

In einer vorteilhaften Ausführungsform der erfindungsgemäßen elektromechanischen Servolenkung ist das Schraubrad auf einer Lenkwelle eines Kraftfahrzeugs drehfest angeordnet ist.

Die Aufgabe wird hinsichtlich des eingangs genannten Verfahrens dadurch gelöst, dass das Verfahren folgende Schritte aufweist: a) Bereitstellen des Antriebselements; b) Bereitstellen der Lagervorrichtung; c) Bereitstellen des Getriebegehäuses umfassend eine Öffnung; d) Positionieren des Antriebselements und der Lagervorrichtung in der Öffnung des Getriebegehäuses relativ zueinander und e) Einpressen des Antriebselements in die Öffnung der Lagervorrichtung mit einer definierten Spannkraft, so dass das Antriebselement durch die Lagervorrichtung längs der Drehachse vorgespannt gelagert wird. Dies ist vorteilhaft, weil dadurch das Antriebselement insbesondere längs der Drehachse gegenüber Auslenkungen des Antriebselements fixiert ist. Vorzugsweise wird in Schritt e) ein kraftgesteuertes Vorspannen durchgeführt.

Vorzugweise wird ein teilweises Einbringen der Lagervorrichtung in die Öffnung des Getriebegehäuses durchgeführt. Besonders bevorzugt erfolgt ein teilweises Einbringen des Antriebselements, insbesondere einer Welle an ihrem ersten Ende und/oder an ihrem zweiten Ende in die Öffnung der Lagervorrichtung.

Vorzugsweise erfolgt ein Vorspannen der Lagervorrichtung im Getriebegehäuse in axiale und/oder radiale und/oder orthogonale Richtung über mindestens einen Vorsprung der Lagervorrichtung.

Wird das Antriebselement zudem elastisch vorgespannt, wird in vorteilhafterweise eine gegenüber einer Gestalt- und/oder Formänderung des Antriebselements nachgiebige Lagerung hergestellt. Ferner wird durch diese Maßnahme eine einer Auslenkung des Antriebselements zurückstellende Lagerung bereitgestellt.

Vorzugsweise wird das Antriebselement in Schritt e) elastisch vorgespannt gelagert. Noch vorteilhafter ist es, wenn das Antriebselement derart vorgespannt gelagert wird, dass es elastisch vorgespannt oder elastisch druckvorgespannt gelagert ist, dass es gegen das Antriebsmittel, in dem angetriebenen Zustand gepresst (gedrückt) wird.

In einer vorteilhaften Ausführungsform des erfindungsgemäßen Verfahrens wird die Lagervorrichtung in Schritt b) mit einer zum gleitenden Lagern des Antriebselements vorgesehenen Lagervorrichtung bereitgestellt und das Antriebselement in Schritt d) durch die Lagervorrichtung gelagert. Nach dieser Maßnahme wird eine Lagervorrichtung in und/oder an dem Antriebselement, zum Beispiel, wenn das Antriebselement als Motorwelle eines Elektromotors ausgestaltet ist, an einem vom Elektromotor beabstandeten Ende der Motorwelle positioniert, so dass die Lagervorrichtung einen entsprechend zu lagernden Abschnitt des Antriebselements lagernd aufnimmt. Vorzugsweise wird die Lagervorrichtung dabei kraftschlüssig angeordnet, so dass es im Falle eines Überschreitens einer Auslenkung des Antriebselements über einen vorgegebenen Wert hinaus beweglich gelagert wird. Besonders bevorzugt wird das Antriebsmittel durch die Lagervorrichtung in radialer Richtung gegenüber Auslenkungen des Antriebselements fixiert.

In einer weiteren vorteilhaften Ausführungsform des erfindungsgemäßen Verfahrens wird in Schritt b) die Lagervorrichtung mit einem elastisch vorspannbaren Spannmittel bereitgestellt und in Schritt c) das Vorspannen durch ein Spannen des Spannmittels gegen die Lagervorrichtung durchgeführt. Dies ist vorteilhaft, weil ein Untersetzungsgetriebe derart hergestellt wird, dass in einem Lagersitz, der das Antriebselement räumlich zumindest teilweise umschließt, zuerst die Lagervorrichtung an dem Antriebselement zum Lagern des Antriebselements positioniert wird und sodann das Spannmittel in dem Lagersitz positioniert wird, und sodann, vorzugsweise kraftgesteuert, vorgespannt wird, sodass die Lagervorrichtung gegen das Antriebselement elastisch vorgespannt wird.

In einer weiteren vorteilhaften Ausführungsform des erfindungsgemäßen Verfahrens wird in Schritt d) und/oder e) das Antriebselement angetrieben. Dies ist vorteilhaft, weil in vorteilhafterweise ein an den angetriebenen Zustand des Antriebselements angepasstes Lagerspiel eingestellt werden kann. Vorzugsweise wird das Antriebselement durch einen Elektromotor angetrieben.

In einer weiteren vorteilhaften Ausführungsform des erfindungsgemäßen Verfahrens wird in Schritt e) das Vorspannen beendet, wenn eine Betriebsgröße eines Antriebsmittels einen vorgegebenen Wert erreicht. Bei dem vorgegebenen Wert der Betriebsgröße kann es sich um eine elektrische Stromstärke und/oder eine elektrische Spannung und/oder ein Bremsmoment eines Elektromotors handeln. Damit wird in vorteilhafterweise ein an den angetriebenen Zustand des Antriebselements angepasstes Lagerspiel eingestellt.

In einer weiteren vorteilhaften Ausführungsform des erfindungsgemäßen Verfahrens sind folgende Schritte vorgesehen: Positionieren eines Spannrings, in der Öffnung des Getriebegehäuses; Vorspannen der Lagervorrichtung mit einer definierten Vorspannkraft, indem der Spannring gegen die Lagervorrichtung drückt.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: eine schematische perspektivische Darstellung eines Lenksystems;
- Figur 2:: ein erfindungsgemäßes Untersetzungsgetriebe nach einer ersten Ausführungsform in einem Längsschnitt entlang einer Schneckenwelle;
- Figur 3:: ein erfindungsgemäßes Untersetzungsgetriebe nach einer zweiten Ausführungsform in einem Längsschnitt entlang einer Schneckenwelle;
- Figur 4:: Explosionsdarstellung erfindungswesentlicher Bauteileile des Untersetzungsgetriebes gemäß Figur 2;
- Figur 5:: eine erfindungsgemäße Lagervorrichtung in einer perspektivischen Darstellung nach einer ersten Ausführungsform der Lagervorrichtung;
- Figur 6:: die Lagervorrichtung gemäß Figur 5 in Draufsicht von vorne gemäß der Darstellung in Figur 5;
- Figur 7:: einen Querschnitt durch die Lagervorrichtung gemäß Figur 5;
- Figur 8:: einen Querschnitt durch eine erfindungsgemäße Lagervorrichtung nach einer zweiten Ausführungsform;
- Figur 9:: eine erfindungsgemäße Lagervorrichtung in einer perspektivischen Darstellung nach einer dritten Ausführungsform der Lagervorrichtung;
- Figur 10:: einen Querschnitt durch die Lagervorrichtung gemäß Figur 9;
- Figur 11:: einen Querschnitt durch eine Lagervorrichtung nach einer weiteren Ausführungsform;
- Figur 12:: einen Querschnitt durch eine Lagervorrichtung nach einer weiteren Ausführungsform;
- Figur 13:: einen Querschnitt durch eine Lagervorrichtung nach einer weiteren Ausführungsform.

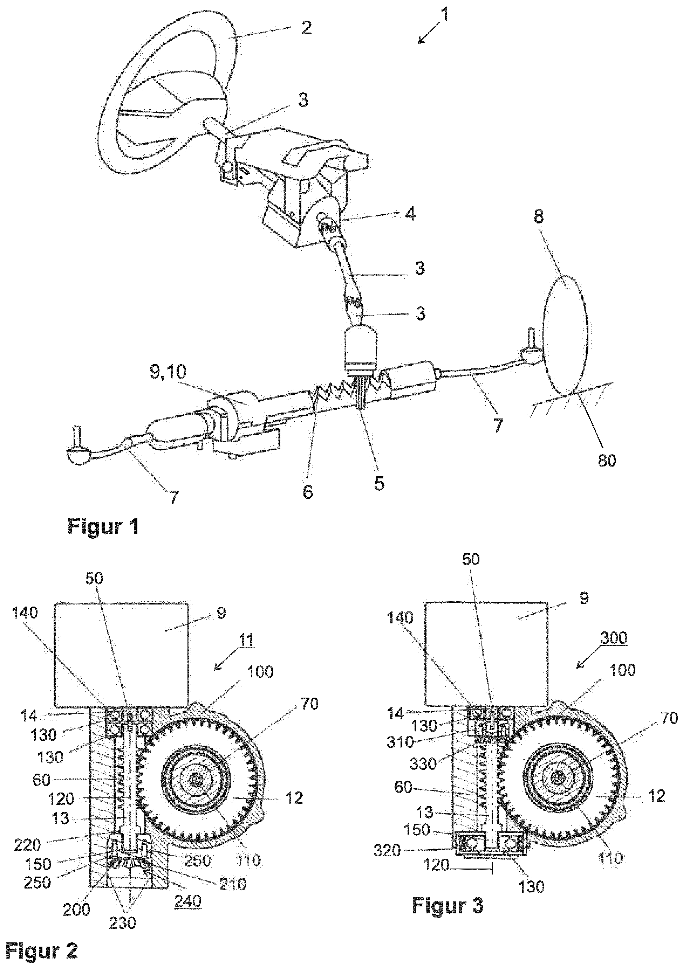

In Figur 1 ist eine schematische Darstellung einer elektromechanischen Servolenkung 1 gezeigt, wobei ein Fahrer über ein Lenkrad 2 ein entsprechendes Drehmoment als Lenkbefehl in eine Lenkwelle 3 einbringen kann. Das Drehmoment wird dann über die Lenkwelle 3 auf ein Lenkritzel 5 übertragen, welches mit einer Zahnstange 6 kämmt, die dann ihrerseits über entsprechende Spurstangen 7 den vorgegebenen Lenkwinkel auf die lenkbaren Räder 8 des Kraftfahrzeugs überträgt, welche eine Fahrbahn 80 kontaktieren.

Die elektromechanische Servolenkung 1 weist eine elektrische Hilfskraftunterstützung 10 mit einem Elektromotor 9 und einem in Figur 1 nicht ersichtlichen Untersetzungsgetriebe 11 (siehe Figur 2) nach der Erfindung auf, so dass die Hilfskraftunterstützung 10 über das Untersetzungsgetriebe nach der Erfindung mit der Zahnstange 6 zur Übertragung einer Hilfskraft (Lenkkraft) auf die Zahnstange 6 wirkmäßig verbunden ist, und zwar über einen hier nicht dargestellten kämmenden Eingriff eines Ritzels in einen in Figur 1 nicht ersichtlichen Bereich der Zahnstange 6.

Die Lenkwelle 3 in der Figur 1 umfasst weiterhin ein Universalgelenk 4, mittels welchem der Verlauf der Lenkwelle 3 im Kraftfahrzeug an die räumlichen und/oder baulichen Gegebenheiten angepasst werden kann.

In der Figur 2 ist in einem Längsschnitt das Untersetzungsgetriebe 11 der Hilfskraftunterstützung 10 dargestellt. Der Längsschnitt verläuft dabei entlang einer Drehachse 120 einer Schneckenwelle 13, die von dem Elektromotor 9 angetrieben ist. Der Elektromotor 9 verfügt über eine Motorwelle 14, die über eine flexible Kupplung 50 mit der Schneckenwelle 13 drehfest gekoppelt ist. Die Schneckenwelle 13 kämmt über eine Schneckenverzahnung 60 mit einem Schneckenrad 12. Das Schneckenrad 12 ist drehfest mit einem Ritzel 70 verbunden, welches analog zu dem Ritzel 5 die Zahnstange 6 kämmt. **In** einem angetriebenen Zustand dreht sich das Schneckenrad 12 und damit das Ritzel 70 um eine Drehachse 110. Die genannten Bauelemente sind in einem gemeinsamen Getriebegehäuse 100 gelagert.

Figur 2 zeigt, dass die Lagerung der Motorwelle 14 sowie die der Schneckenwelle 13 an einem motorseitigen Ende 140 der Schneckenwelle 13 jeweils in einem Wälzlager 130 erfolgt, welches als Kugellager ausgebildet ist. Die Schneckenwelle 13 weist weiter ein motorfernes Ende 150 auf, welches in einer Lagervorrichtung nach der Erfindung gelagert ist. Die Lagervorrichtung nach der Erfindung umfasst eine als Gleitlager 200 ausgebildete Lagervorrichtung und einen Spannring 210. Die Lagervorrichtung 200 wird durch den Spannring 210 gegen einen Wellenabsatz 220 der Schneckenwelle 14 gespannt, so dass die Schneckenwelle 13 durch die Lagervorrichtung 200 längs der Drehachse 120 axial druckvorgespannt gelagert ist. Der Spannring 210 stützt sich dabei quer zur Drehachse 120 radial gegen eine Wandung 230 eines Lagersitzes 240 ab, indem er dementsprechend elastisch vorgespannt ist. Die Lagervorrichtung 200 ist kraftschlüssig in dem Lagersitz 240 angeordnet, indem sich ein Kontaktabschnitt 250 der Lagervorrichtung, der als Federbalken ausgestaltet ist, aufgrund einer elastischen Vorspannung des Kontaktabschnitts 250 gegen die Wandung 230 abgestützt. Die Lagervorrichtung 200 lässt sich danach durch Aufbringen einer vorgegebenen Kraft längs der Drehachse 120 verschieben und damit in den Lagersitz 240 einführen.

Figur 3 zeigt ein Untersetzungsgetriebe 300 nach der Erfindung in einer zweiten Ausführungsform in einem Längsschnitt analog zu Figur 2, wobei im Unterschied zu dem Untersetzungsgetriebe 11 an dem motorfernen Ende 150 der Schneckenwelle 13 die Lagerung der Schneckenwelle 13 dort durch ein Wälzlager 320 erfolgt. Das motornahe Ende 140 der Schneckenwelle 13 ist in einer Lagervorrichtung 310 gelagert, welches durch einen Spannring 330 gegen die Motorwelle 14 vorgespannt gelagert ist. Die Lagervorrichtung 310 ist danach im Unterschied zu der Lagervorrichtung 200 gegenüber dem motornahen Ende 140 der Schneckenwelle durchsteckbar ausgestaltet.

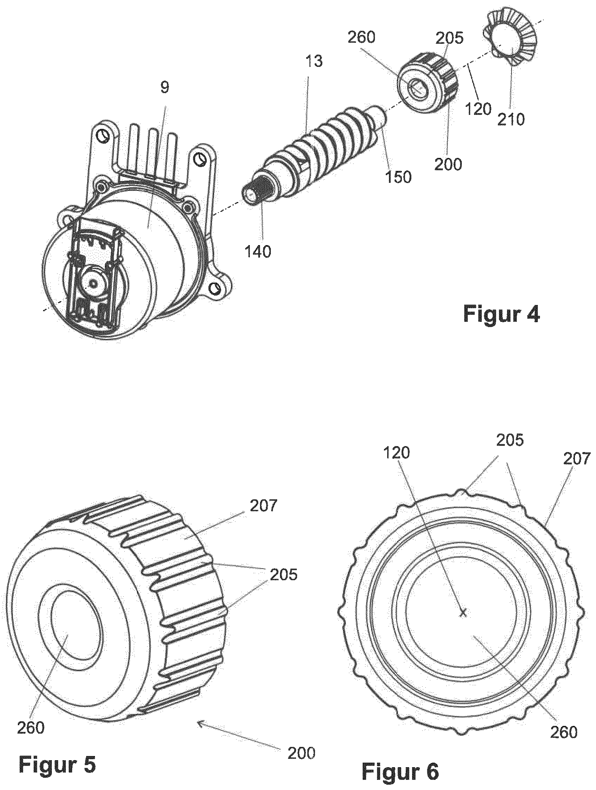

Figur 4 zeigt in einer Explosionsdarstellung die Lagervorrichtung nach der Erfindung gemäß Figur 3, welche den Spannring 210 und die Lagervorrichtung 200 umfasst, sowie die Schneckenwelle 13 und den Elektromotor 9. Die genannten Bauteile sind dabei derart auseinander gezogen dargestellt, dass sie in einem entsprechend zusammengesetzten Zustand, wie in Figur 2 dargestellt, zueinander angeordnet sind. Die Bauteile werden wie folgt zusammengebaut: Die Schneckenwelle 13 wird an ihrem motornahen Ende 140 wird mit dem Motor 9 zur Übertragung eines Motordrehmoments auf die Schneckenwelle 13 verbunden. Sodann wird die Lagervorrichtung 200 an dem motorfernen Ende 150 der Schneckenwelle 13 positioniert, so dass das motorferne Ende 150 in einem Lagerabschnitt 260 der Lagervorrichtung 200, also dem Bereich, der das motorferne Ende 150 radial lagert und somit umgibt, radial gelagert ist. Sodann wird der Spannring 210 gegen die Lagervorrichtung 200 gedrückt, so dass der Spannring 210 je nach Entfernung längs der Drehachse 120 eine dementsprechend große (relativ kleiner Abstand zu der Lagervorrichtung 200) oder eine geringe Vorspannkraft (relativ großer Abstand zu der Lagervorrichtung 200) auf die Lagervorrichtung 200 und damit auf die Schneckenwelle 13 ausübt, wenn der Spannring 210 die Lagervorrichtung an seiner in Figur 2 ersichtlichen, ausgewölbten Seite kontaktiert. Die Schneckenwelle 13, die Lagervorrichtung 200 und der Spannring 210 bilden eine Bauteilgruppe. Aus Figur 4 ist ferner ersichtlich, dass das die Lagervorrichtung 200 Pressrippen 205 aufweist.

Die Figuren 5 und 6 zeigen die Lagervorrichtung 200 in perspektivischer Ansicht bzw. in Draufsicht. An einer Oberfläche 207 der Lagervorrichtung 200, also die Fläche, die in dem montierten Zustand der Lagervorrichtung 200 der Wandung 230 zugewandt ist, weist die Lagervorrichtung 200 die Pressrippen 205 auf, also Vorsprünge, so dass die Lagervorrichtung 200 durch eine elastisch oder elastisch-plastische Verformung der Pressrippen 205 durch Aufbringen einer relativ konstanten Verschiebekraft in den Lagersitz 240 (alternativ, wie in Figur 3 ersichtlich,) eingeführt und dadurch montiert wird. Wird die Schneckenwelle 13 während der Montage des Spannrings 210 in dem Lagersitz 240 durch den Elektromotor 9 angetrieben, kann aufgrund der durch die Pressrippen 205 gegebenen konstanten Verschiebekraft der Lagervorrichtung 200 gegenüber der Wandung 230 ein Vorspannen des Spannrings 210, sprich, ein Verschieben des Spannrings 200 gegen die Lagervorrichtung 200, so dass dieses gegen die Schneckenwelle 13, dort den Wellenabsatz 220, am motorfernen Ende 150 gepresst wird, bei einer vorgegebenen Spannkraft und damit durch eine entsprechende, sogenannte Deltakraftabschaltung des Elektromotors 9 realisiert werden. Die Pressrippen 205 sind in dem montierten Zustand der Lagervorrichtung 200 entlang der Längsachse 120 der Schneckenwelle 13 orientiert, also axial.

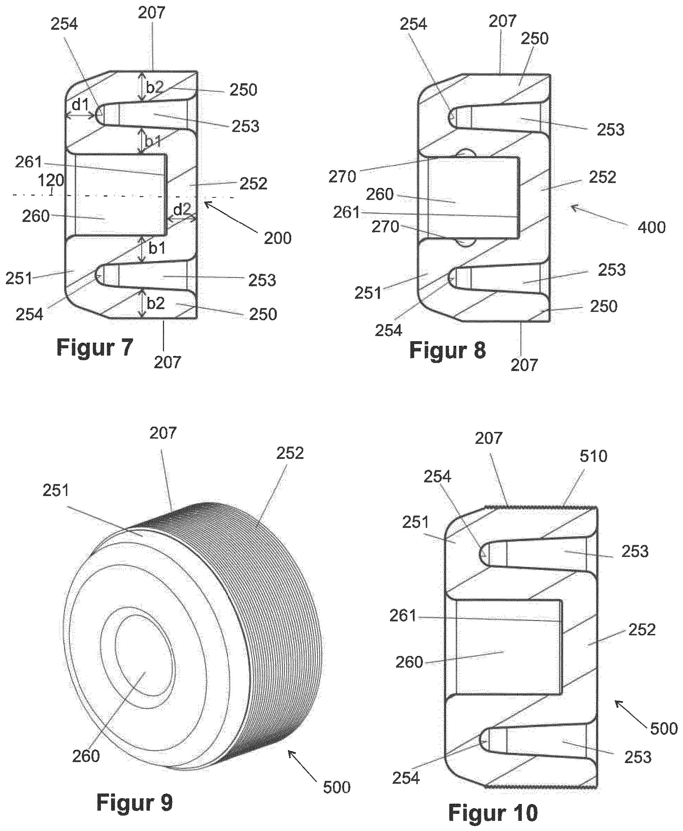

Aus der Schnittdarstellung gemäß Figur 7 ist ersichtlich, dass die Lagervorrichtung 200 einen als Federbalken ausgeformten, radial umlaufenden Kontaktabschnitt 250 aufweist, der wiederum die Oberfläche 207 aufweist. Sprich, die Lagervorrichtung 200 wird insbesondere durch eine sich rückstellende elastische Verformung des Kontaktabschnitts 250 gegen die Wandung 230 im montierten Zustand gepresst.

Aus den Figuren 5 und 6 sowie insbesondere der Schnittdarstellung gemäß Figur 7 ist ferner der Lagerabschnitt 260 der Lagervorrichtung 200 ersichtlich, der um die Schneckenwelle 13 im montierten Zustand, also wenn die Lagervorrichtung 200 gegen das motorferne Ende 150 der Antriebsschnecke 13 zu dessen axialer Fixierung gepresst ist, diese an dem motorfernen Ende 150 räumlich-körperlich im Sinne einer Hülse umschließt. Indem der Kontaktbereich 250 als Federbalken ausgestaltet ist, wie insbesondere aus Figur 7 ersichtlich ist, ist die elastische Verformung in dem geschilderten montierten Zustand der Lagervorrichtung 200 (siehe dazu insbesondere Figur 2) lokalisiert, so dass der Lagerabschnitt 260 nahezu keine radiale elastische Verformung erfährt, was sich positiv auf eine reibungsarme Lagerung der Schneckenwelle 13 in dem Lagerabschnitt 260 auswirkt. Mit anderen Worten ausgedrückt, der Lagerabschnitt 260 ist von dem Kontaktabschnitt 250 mechanisch entkoppelt bei einer Belastung in radialer Richtung. Die Öffnung 260 kann dabei topfförmig oder napfförmig ausgebildet sein. Die Öffnung 260 kann alternativ auch eine Durchgangsöffnung aufweisen. Aus Figur 6 ist ferner ersichtlich, dass durch die Lagervorrichtung 200 eine Längsachse 120 definiert ist.

Aus Figur 7 ist ersichtlich, dass die Oberfläche 207 und eine Ausnehmung 253 in radialer Richtung gemäß einem Abstand b2 zueinander beabstandet sind. Aus Figur 7 ist ferner ersichtlich, dass der Lagerabschnitt 260 bzw. die entsprechende Öffnung der Lagervorrichtung 200 und die Ausnehmung 253 gemäß einem Abstand b1 zueinander beabstandet sind. Aus Figur 7 ist ferner ersichtlich, dass die Ausnehmung 253 einen Ausnehmungsboden 254 aufweist und dass der Ausnehmungsboden 254 und eine Stirnseite eines ersten Endes 251 des Gleitlagers 200 gemäß einem Abstand d1 zueinander beabstandet sind. Aus Figur 7 ist ferner ersichtlich, dass ein Öffnungsboden 261 und eine Stirnseite eines zweiten Endes 252 des Gleitlagers 200 gemäß einem Abstand d2 zueinander beabstandet sind. Die genannten Abstände sind proportional zueinander in Figur 7 dargestellt. Durch die genannten Abstände sind entsprechende Wandstärken der Lagervorrichtung 200 definiert.

Der Abstand b1 entspricht danach einer Wandstärke einer Wandung, die zwischen der Öffnung 260 und der Ausnehmung 253 angeordnet ist. Der Abstand b2 entspricht danach einer Wandstärke einer Wandung, die zwischen der Oberfläche 207 und der Ausnehmung 253 angeordnet ist. Bevorzugt

Aus der Schnittdarstellung gemäß Figur 8 ist eine Lagervorrichtung 400 einer weiteren erfindungsgemäßen Lagervorrichtung ohne Darstellung des Spannrings 210 ersichtlich, welches im Unterschied zu der Lagervorrichtung 200 in dem Lagerabschnitt 260 bzw. in der entsprechenden Öffnung der Lageröffnung radial angeordnete Ausnehmungen 270 zur Bevorratung und/oder zum Transport von Schmiermittel aufweist, so dass in dem in Figur 2 ersichtlichen, montierten Zustand der Lagervorrichtung 200, welcher auf die Lagervorrichtung 400 übertragbar ist, die Schneckenwelle 13 bei ihrem Kontakt mit dem Lagerabschnitt 260 mit Schmiermittel versorgt wird.

Die Figuren 9 und 10 zeigen eine Lagervorrichtung 500 einer weiteren erfindungsgemäßen Lagervorrichtung ohne Darstellung des Spannrings 210. Die Lagervorrichtung 500 ist analog zu der Lagervorrichtung 200 ausgestaltet, bis auf, dass die Oberfläche 207 durch ein Gewinde gebildete Vorsprünge 510 aufweist. Entsprechende Gewindegänge verlaufen in tangentialer Richtung bzw. quer zur Drehachse 120, in einem analog zu Figur 2 montierten Zustand des Gleitlagers 500.

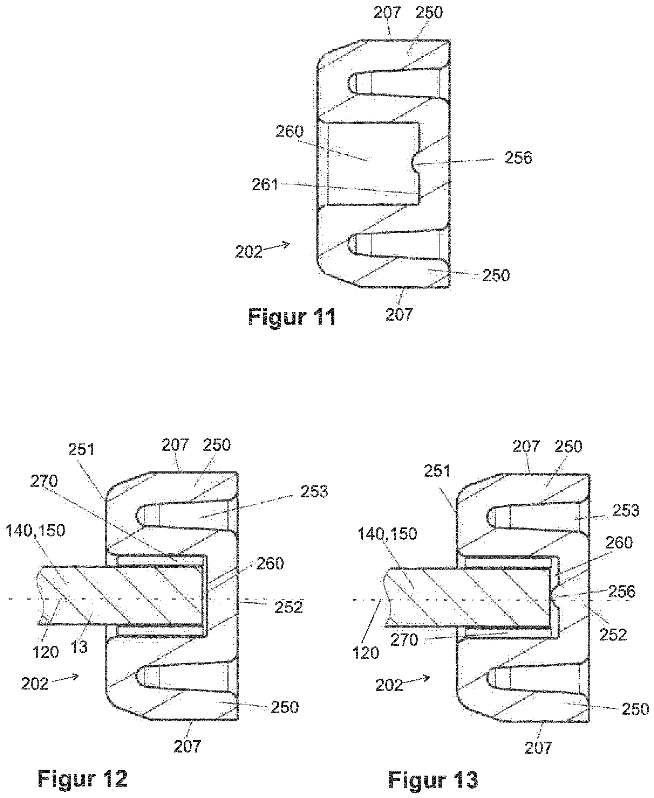

Figur 11 zeigt einen Querschnitt durch eine Lagervorrichtung 202 einer weiteren erfindungsgemäßen Lagervorrichtung. Die Lagervorrichtung 202 ist analog zu der Lagervorrichtung 200 ausgestaltet, bis auf, dass es einen konzentrischen Vorsprung 256 aufweist, der in den Lagerabschnitt 260 bzw. die Öffnung der Lagervorrichtung 202 hineinragt. **In** einem montierten Zustand kann die Lagervorrichtung 202 danach das motorferne Ende 150 oder das motornahe Ende 160 der Schneckenwelle 13 über den Vorsprung 256 in Richtung der Drehachse 120 kontaktieren. Der Vorsprung 256 sorgt dafür, dass die Reibung zwischen der Lagervorrichtung 202 und der Schneckenwelle 13 reduziert wird. Der Vorsprung 256 ragt in die Öffnung 260 hinein. In einem montierten Zustand kann die Lagervorrichtung 202 danach die Antriebswelle 13 über den Vorsprung 256 in Richtung der Drehachse 120 kontaktieren.

Figur 12 zeigt einen Querschnitt durch die Lagervorrichtung 202, wobei die Lagervorrichtung 202 hier ohne den Vorsprung 256 ausgestaltet ist. Die Lagervorrichtung 202 weist ein Nadellager 270 auf, so dass das motorferne Ende 150 oder das motornahe Ende 160 der Schneckenwelle 13 über das Nadellager 270 bzw. dementsprechende Wälzkörper in radialer Richtung in dem Lagerabschnitt 260 gelagert ist.

Figur 13 zeigt einen Querschnitt durch die Lagervorrichtung 202, wobei die Lagervorrichtung 202 den Vorsprung 256 und das Nadellager 270 aufweist.

## Patentansprüche

1. Lagervorrichtung (200, 202, 310, 400, 500) für ein Untersetzungsgetriebe (11) für eine elektromechanische Servolenkung, umfassend ein erstes Ende (251) und ein dem ersten Ende (251) gegenüberliegendes zweites Ende (252), wobei zwischen dem ersten Ende (251) und dem zweiten Ende (252) ein Kontaktabschnitt (250) vorgesehen ist, und einen Lagerabschnitt (260) zum Lagern eines Antriebselements (13), wobei der Lagerabschnitt (260) als Öffnung ausgebildet ist, welche von dem ersten Ende (251) in Richtung des zweiten Endes (252) hineinragt und eine Ausnehmung (253) vom zweiten Ende (252) in Richtung des ersten Endes (251) hineinragt, wobei die Öffnung (260) zu der Ausnehmung (253) radial beabstandet ist, die Öffnung (260) zumindest teilweise kreiszylindrisch ausgebildet ist und die Öffnung (260) einen Öffnungsboden (261) aufweist, wobei an einem Außenumfang (207) des Kontaktabschnitts (250) mindestens ein Vorsprung (205) vorgesehen ist, **dadurch gekennzeichnet, dass** die Ausnehmung (253) radial umlaufend ausgebildet ist und einen Ausnehmungsboden (254) aufweist.

2. Lagervorrichtung (200, 202, 310, 400, 500) nach Anspruch 1, **dadurch gekennzeichnet, dass** die Ausnehmung (253) ringförmig und/oder konisch ausgebildet ist.

3. Lagervorrichtung (200, 202, 310, 400, 500) nach einem der vorangehenden Ansprüche, **dadurch gekennzeichnet, dass** die Lagervorrichtung eine Wandstärke aufweist, wobei die Ausnehmung (253) ein Volumen aufweist, dessen Wert größer ist als die kubische Wandstärke.

4. Lagervorrichtung (200, 202, 310, 400, 500) nach Anspruch 1 oder 2, **dadurch gekennzeichnet, dass** ein radialer Abstand (b1) zwischen der Öffnung (260) und der Ausnehmung (253) kleiner einem ersten Abstand (d1) zwischen dem Ausnehmungsboden (254) und der Stirnseite des ersten Endes (251) und/oder kleiner einem zweiten Abstand (d2) zwischen dem Öffnungsboden (261) und der Stirnseite des zweiten Endes (252) ausgebildet ist, und wobei vorzugsweise der zweite Abstand (d2) zwischen dem Öffnungsboden (261) und der Stirnseite des zweiten Endes (252) kleiner oder gleich dem ersten Abstand (d1) zwischen dem Ausnehmungsboden (254) und der Stirnseite des ersten Endes (251) ist.

5. Lagervorrichtung (200, 202, 310, 400, 500) nach einem der vorangehenden Ansprüche, **dadurch gekennzeichnet, dass** die Lagervorrichtung einstückig und/oder aus einem Harzmaterial ausgebildet ist.

6. Lagervorrichtung (200, 202, 310, 400, 500) nach einem der vorangehenden Ansprüche, **dadurch gekennzeichnet, dass** der Lagerabschnitt (260) eine oder mehrere Vertiefungen (270) aufweist.

7. Lagervorrichtung (200, 202, 310, 400, 500) nach einem der vorangehenden Ansprüche, **dadurch gekennzeichnet, dass** die Lagervorrichtung (200, 202, 310, 400, 500) ein elastisch vorspannbares Spannmittel (210, 330) zum Vorspannen der Lagervorrichtung (200, 202, 310, 400, 500) gegen das Antriebselement (13) aufweist.

8. Untersetzungsgetriebe (11, 300) umfassend ein mit einem Schraubrad (12) kämmendes Antriebselement (13), wobei das Antriebselement als Welle ausgebildet ist, welche in einem Getriebegehäuse (100) angeordnet ist und an ihrem ersten Ende (140) und an ihrem zweiten Ende (150) in dem Getriebegehäuse (100) drehbar um eine Drehachse (120) gelagert ist, **dadurch gekennzeichnet, dass** das Untersetzungsgetriebe (11) eine Lagervorrichtung (200, 202, 310, 400, 500) nach einem der Ansprüche 1 bis 7 umfasst, wobei vorzugsweise die Welle (13) an ihrem ersten Ende (140) oder an ihrem zweiten Ende (150) zumindest teilweise in der Öffnung (260) aufgenommen ist.

9. Untersetzungsgetriebe (11, 300) nach Anspruch 8, **dadurch gekennzeichnet, dass** die Lagervorrichtung (200, 202, 310, 400, 500) die Welle (13) in axialer und/oder radialer Richtung zur Drehachse (120) vorspannt.

10. Untersetzungsgetriebe (11, 300) nach einem der Ansprüche 8 oder 9, **dadurch gekennzeichnet, dass** die Lagervorrichtung (200, 202, 310, 400, 500) einen Kontaktabschnitt (250) zum kraftschlüssigen Kontaktieren mit einem zum Lagern der Lagervorrichtung (200, 202, 310, 400, 500) vorgesehenen Bereich (230) des Getriebegehäuses aufweist, wobei an einem Außenumfang (207) des Kontaktabschnitts (250) mindestens ein Vorsprung (205) vorgesehen ist.

11. Untersetzungsgetriebe nach einem der vorangehenden Ansprüche 8 bis 10, **dadurch gekennzeichnet, dass** die Welle (13) eine Schneckenwelle und das Schraubrad (12) ein Schneckenrad ist.

12. Elektromechanische Servolenkung, umfassend einen Elektromotor (9) mit einer Motorwelle und ein Untersetzungsgetriebe (11) nach einem der Ansprüche 8 bis 11, wobei die Motorwelle die Welle (13) antreibt, und wobei insbesondere das Schraubrad (12) auf einer Lenkwelle (70) eines Kraftfahrzeugs drehfest angeordnet ist.

13. Verfahren zur Verbindung eines Antriebselements (13) einer elektromechanischen Servolenkung mit einer Lagervorrichtung (200, 202, 310, 400, 500), die das Antriebselement (13) drehbar in einem Getriebegehäuse (100) um eine Drehachse (120) lagert und in Richtung eines Schraubrads (12) vorspannt, **dadurch gekennzeichnet, dass** das Verfahren folgende Schritte aufweist:
a) Bereitstellen des Antriebselements (13);
b) Bereitstellen der Lagervorrichtung (200, 310, 400, 500, 210, 330) nach einem der Ansprüche 1 bis 7;
c) Bereitstellen des Getriebegehäuses (100), umfassend eine Öffnung (240);
d) Positionieren des Antriebselements (13) und der Lagervorrichtung (200, 202, 310, 400, 500, 210, 330) in der Öffnung (240) des Getriebegehäuses (100) relativ zueinander und
e) Einpressen des Antriebselements (13) in die Öffnung (260) der Lagervorrichtung (200, 202, 310, 400, 500) mit einer definierten Spannkraft, so dass das Antriebselement (13) durch die Lagervorrichtung (200, 202, 310, 400, 500, 210, 330) längs der Drehachse vorgespannt gelagert wird.

14. Verfahren nach Anspruch 13, **dadurch gekennzeichnet, dass** folgender Schritt vorgesehen ist:
Positionieren eines Spannrings (210, 330) in der Öffnung (240) des Getriebegehäuses (100);
Vorspannen der Lagervorrichtung (200, 202, 310, 400, 500) mit einer definierten Vorspannkraft, indem der Spannring (210, 330) gegen die Lagervorrichtung (200, 202, 310, 400, 500) drückt.

## Claims

1. A bearing device (200, 202, 310, 400, 500) for a reduction gear (11) for an electromechanical power steering system, comprising a first end (251) and a second end (252) opposite the first end (251), wherein a contact portion (250) is provided between the first end (251) and the second end (252), and a bearing portion (260) for supporting a drive element (13), wherein the bearing portion (260) is formed as an opening extending from the first end (251) toward the second end (252), and a recess (253) extends from the second end (252) toward the first end (251), wherein the opening (260) is radially spaced apart from the recess (253), the opening (260) is at least partially circular-cylindrical in shape, and the opening (260) has an opening bottom (261), wherein at least one projection (205) is provided on an outer circumference (207) of the contact portion (250), **characterized in that** the recess (253) is formed to extend radially around the circumference and has a recess bottom (254).

2. Bearing device (200, 202, 310, 400, 500) according to claim 1, **characterized in that** the recess (253) is annular and/or conical.

3. Bearing device (200, 202, 310, 400, 500) according to one of the preceding claims, **characterized in that** the bearing device has a wall thickness, wherein the recess (253) has a volume whose value is greater than the cubic wall thickness.

4. Bearing device (200, 202, 310, 400, 500) according to claim 1 or 2, **characterized in that** a radial distance (b1) between the opening (260) and the recess (253) is less than a first distance (d1) between the recess bottom (254) and the end face of the first end (251) and/or smaller than a second distance (d2) between the opening bottom (261) and the end face of the second end (252), and wherein preferably the second distance (d2) between the bottom of the opening (261) and the end face of the second end (252) is less than or equal to the first distance (d1) between the bottom of the recess (254) and the end face of the first end (251).

5. Bearing device (200, 202, 310, 400, 500) according to any one of the preceding claims, **characterized in that** the bearing device is formed integrally and/or from a resin material.

6. Bearing device (200, 202, 310, 400, 500) according to any one of the preceding claims, **characterized in that** the bearing portion (260) has one or more recesses (270).

7. Bearing device (200, 202, 310, 400, 500) according to any one of the preceding claims, **characterized in that** the bearing device (200, 202, 310, 400, 500) comprises an elastically preloadable clamping means (210, 330) for preloading the bearing device (200, 202, 310, 400, 500) against the drive element (13).

8. A reduction gear (11, 300) comprising a drive element (13) meshing with a screw gear (12), wherein the drive element is designed as a shaft which is arranged in a gear housing (100) and is mounted at its first end (140) and at its second end (150) in the gear housing (100) about an axis of rotation (120), **characterized in that** the reduction gear (11) comprises a bearing device (200, 202, 310, 400, 500) according to one of claims 1 to 7, wherein the shaft (13) is preferably received at least partially in the opening (260) at its first end (140) or at its second end (150).

9. Reduction gear (11, 300) according to claim 8, **characterized in that** the bearing device (200, 202, 310, 400, 500) preloads the shaft (13) in the axial and/or radial direction relative to the axis of rotation (120).

10. Reduction gear (11, 300) according to one of claims 8 or 9, **characterized in that** the bearing device (200, 202, 310, 400, 500) has a contact portion (250) for force-fitting engaging with a region (230) of the gear housing provided for mounting the bearing device (200, 202, 310, 400, 500), wherein at least one projection (205) is provided on an outer circumference (207) of the contact portion (250).

11. Reduction gear according to any one of the preceding claims 8 to 10, **characterized in that** the shaft (13) is a worm shaft and the screw wheel (12) is a worm wheel.

12. An electromechanical power steering system comprising an electric motor (9) with a motor shaft and a reduction gear (11) according to any one of claims 8 to 11, wherein the motor shaft drives the shaft (13), and wherein, in particular, the screw wheel (12) is fixedly mounted on a steering shaft (70) of a motor vehicle for conjoint rotation therewith.

13. Method for connecting a drive element (13) of an electromechanical power steering system to a bearing device (200, 202, 310, 400, 500) which rotatably supports the drive element (13) in a gear housing (100) about an axis of rotation (120) and preloads it in the direction of a worm wheel (12), **characterized in that** the method comprises the following steps:
a) providing the drive element (13);
b) providing the bearing device (200, 310, 400, 500, 210, 330) according to one of claims 1 through 7;
c) providing the gear housing (100) comprising an opening (240);
d) positioning the drive element (13) and the bearing device (200, 202, 310, 400, 500, 210, 330) in the opening (240) of the gear housing (100) relative to one another; and
e) pressing the drive element (13) into the opening (260) of the bearing device (200, 202, 310, 400, 500) with a defined clamping force, such that the drive element (13) is mounted by the bearing device (200, 202, 310, 400, 500, 210, 330) in a preloaded manner along the axis of rotation.

14. A method according to claim 13, **characterized in that** the following step is provided:
positioning a clamping ring (210, 330) in the opening (240) of the gear housing (100);
preloading the bearing device (200, 202, 310, 400, 500) with a defined preload force by pressing the clamping ring (210, 330) against the bearing device (200, 202, 310, 400, 500).

## Revendications

1. Dispositif de palier (200, 202, 310, 400, 500) pour un réducteur (11) destiné à une direction assistée électromécanique, comprenant une première extrémité (251) et une deuxième extrémité (252) opposée à la première extrémité (251), une partie de contact (250) étant prévue entre la première extrémité (251) et la deuxième extrémité (252), et une partie de palier (260) destinée à supporter un élément d'entraînement (13), la partie de palier (260) étant réalisée sous la forme d'une ouverture qui s'étend de la première extrémité (251) vers la deuxième extrémité (252) et un évidement (253) s'étendant depuis la deuxième extrémité (252) en direction de la première extrémité (251), l'ouverture (260) étant espacée radialement de l'évidement (253), l'ouverture (260) étant au moins partiellement de forme cylindrique circulaire et présentant un fond d'ouverture (261), au moins une saillie (205) étant prévue sur une périphérie extérieure (207) de la partie de contact (250), **caractérisé en ce que** l'évidement (253) est réalisé de manière circonférentielle dans le sens radial et présente un fond d'évidement (254).

2. Dispositif de palier (200, 202, 310, 400, 500) selon la revendication 1, **caractérisé en ce que** l'évidement (253) est de forme annulaire et/ou conique.

3. Dispositif de palier (200, 202, 310, 400, 500) selon l'une des revendications précédentes, **caractérisé en ce que** le dispositif de palier présente une épaisseur de paroi, l'évidement (253) présentant un volume dont la valeur est supérieure à l'épaisseur de paroi cubique.

4. Dispositif de palier (200, 202, 310, 400, 500) selon la revendication 1 ou 2, **caractérisé en ce qu'**une distance radiale (b1) entre l'ouverture (260) et l'évidement (253) est inférieure à une première distance (d1) entre le fond de l'évidement (254) et la face frontale de la première extrémité (251) et/ou inférieure à une deuxième distance (d2) entre le fond de l'ouverture (261) et la face frontale de la deuxième extrémité (252), et dans lequel, de préférence, la deuxième distance (d2) entre le fond de l'ouverture (261) et la face frontale de la deuxième extrémité (252) est inférieure ou égale à la première distance (d1) entre le fond de l'évidement (254) et la face frontale de la première extrémité (251).

5. Dispositif de palier (200, 202, 310, 400, 500) selon l'une des revendications précédentes, **caractérisé en ce que** le dispositif de stockage est formé d'une seule pièce et/ou à partir d'une matière résineuse.

6. Dispositif de palier (200, 202, 310, 400, 500) selon l'une des revendications précédentes, **caractérisé en ce que** la partie de palier (260) comporte un ou plusieurs renfoncements (270).

7. Dispositif de palier (200, 202, 310, 400, 500) selon l'une des revendications précédentes, **caractérisé en ce que** le dispositif de palier (200, 202, 310, 400, 500) comporte un moyen de serrage (210, 330) pouvant être précontraint élastiquement pour précontraindre le dispositif de palier (200, 202, 310, 400, 500) contre l'élément d'entraînement (13).

8. Réducteur (11, 300) comprenant un élément d'entraînement (13) engrenant avec une roue à vis sans fin (12), l'élément d'entraînement étant réalisé sous la forme d'un arbre qui est disposé dans un carter de réducteur (100) et qui est monté de manière rotative dans le carter de réducteur (100) à sa première extrémité (140) et à sa deuxième extrémité (150) de manière à pouvoir tourner autour d'un axe de rotation (120), **caractérisé en ce que** le réducteur (11) comprend un dispositif de palier (200, 202, 310, 400, 500) selon l'une des revendications 1 à 7, l'arbre (13) étant de préférence logé, à sa première extrémité (140) ou à sa deuxième extrémité (150), au moins partiellement dans l'ouverture (260).

9. Réducteur (11, 300) selon la revendication 8, **caractérisé en ce que** le dispositif de palier (200, 202, 310, 400, 500) précontraint l'arbre (13) dans le sens axial et/ou radial par rapport à l'axe de rotation (120).

10. Réducteur (11, 300) selon l'une des revendications 8 ou 9, **caractérisé en ce que** le dispositif de palier (200, 202, 310, 400, 500) comporte une partie de contact (250) destinée à venir en contact par adhérence avec une zone (230) du carter de réducteur prévue pour le montage du dispositif de palier (200, 202, 310, 400, 500), au moins une saillie (205) étant prévue sur une périphérie extérieure (207) de la partie de contact (250).

11. Réducteur selon l'une des revendications 8 à 10 précédentes, **caractérisé en ce que** l'arbre (13) est un arbre à vis sans fin et la roue à vis sans fin (12) est une roue à vis sans fin.

12. Direction assistée électromécanique, comprenant un moteur électrique (9) avec un arbre moteur et un réducteur (11) selon l'une des revendications 8 à 11, l'arbre moteur entraînant l'arbre (13), et la roue à vis sans fin (12) étant notamment disposée de manière solidaire en rotation sur un arbre de direction (70) d'un véhicule automobile.

13. Procédé pour relier un élément d'entraînement (13) d'une direction assistée électromécanique à un dispositif de palier (200, 202, 310, 400, 500) qui supporte l'élément d'entraînement (13) de manière rotative dans un carter de réducteur (100) autour d'un axe de rotation (120) et le précontraint en direction d'une roue à vis sans fin (12), **caractérisé en ce que** le procédé comprend les étapes suivantes :
a) la mise à disposition de l'élément d'entraînement (13) ;
b) fournir le dispositif de palier (200, 310, 400, 500, 210, 330) selon l'une des revendications 1 à 7 ;
c) mise à disposition du carter de réducteur (100) comprenant une ouverture (240) ;
d) positionner l'élément d'entraînement (13) et le dispositif de palier (200, 202, 310, 400, 500, 210, 330) dans l'ouverture (240) du carter de réducteur (100) l'un par rapport à l'autre, et
e) enfoncer l'élément d'entraînement (13) dans l'ouverture (260) du dispositif de palier (200, 202, 310, 400, 500) avec une force de serrage définie, de sorte que l'élément d'entraînement (13) soit monté de manière précontrainte par le dispositif de palier (200, 202, 310, 400, 500, 210, 330) le long de l'axe de rotation.

14. Procédé selon la revendication 13, **caractérisé en ce qu'**il comprend l'étape suivante :
positionnement d'une bague de serrage (210, 330) dans l'ouverture (240) du carter de réducteur (100) ;
précontrainte du dispositif de palier (200, 202, 310, 400, 500) avec une force de précontrainte définie, en appuyant la bague de serrage (210, 330) contre le dispositif de palier (200, 202, 310, 400, 500).
